# EUROPÄISCHE PATENTSCHRIFT

(11) **EP 3 032 733 B1**
(45) Veröffentlichungstag und Bekanntmachung des Hinweises auf die Patenterteilung: **17.07.2019**
(21) Anmeldenummer: 15195907.9
(22) Anmeldetag: 23.11.2015
(51) Int. Cl.: H02M 7/487

(54) **VERFAHREN ZUM BETRIEB EINES 3-LEVEL UMRICHTERS UND UMRICHTER**
METHOD FOR OPERATING A 3-LEVEL INVERTER AND INVERTER
PROCÈDE DE FONCTIONNEMENT D'UN CONVERTISSEUR À 3 NIVEAUX ET CONVERTISSEUR

(30) Priorität: 13.12.2014 DE 102014018666
(43) Veröffentlichungstag der Anmeldung: 15.06.2016
(73) Patentinhaber: Baumüller Nürnberg GmbH, 90482 Nürnberg (DE)
(72) Erfinder: LELKES, András, 90491 Nürnberg (DE)
(74) Vertreter: FDST Patentanwälte

(56) Entgegenhaltungen:
- EP-A1- 2 120 322
- DE-B4-102010 008 426
- DE-T2- 3 885 737
- DE-T2- 69 313 340

## Beschreibung

Die Erfindung betrifft einen Umrichter mit einem oberen Zweig, und mit einem unteren Zweig, sowie mit einem mittleren Zweig.

Industrieanlagen weisen meist eine rotierende elektrische Maschine auf, mittels derer ein Objekte angetrieben wird, wie z.B. ein Förderband. Hierfür weist die elektrische Maschine einen Rotor sowie einen Stator auf, wobei der Rotor mittels magnetischer Wechselwirkung bezüglich des Stators bei Betrieb rotiert wird. Insbesondere bei einer vergleichsweise leistungsstarken elektrischen Maschine (Elektromotor) weist der Rotor eine Anzahl an Permanentmagneten auf, und mittels des Stators wird ein rotierendes Magnetfeld erzeugt. Mit anderen Worten handelt es sich um einen bürstenlosen Elektromotor, sodass eine Funkenbildung aufgrund der Bestreichung eines Kommutators mittels Bürsten vermieden ist. Infolgedessen ist es erforderlich, den Stator mittels eines im Wesentlichen sinusförmigen elektrischen Stroms zu bestromen, wobei die Frequenz des elektrischen Stroms proportional zur Drehzahl der elektrischen Maschine ist, und wobei mittels der Amplitude des elektrischen Stroms das Drehmoment des Elektromotors eingestellt wird. Somit ist es erforderlich, die Frequenz und die Amplitude des elektrischen Stroms zu regeln oder zumindest zu steuern und an die Erfordernisse an den Elektromotor anzupassen.

Hierfür werden Umrichter eingesetzt, die an ein Stromnetz angeschlossen werden, das eine Netzfrequenz aufweist. Das Stromnetz führt meist einen Dreiphasenwechselstrom mit einer Frequenz von 50 Hertz. Dieser wird mittels einer Gleichrichterseite des Umrichters in einen Gleichstrom transformiert und mittels einer Wechselstromseite des Umrichters in einen Wechselstrom, der an die Anforderungen an den Elektromotor angepasst ist. Die Wechselrichterseite umfasst hierbei meist eine Brückenschaltung, insbesondere eine B6-Schaltung, wobei jeder Brückenzweig einen Halbleiterschalter aufweist. Diese werden mittels einer Schaltfrequenz angesteuert und somit von einem leitenden in einen nicht leitenden Zustand versetzt. Mit anderen Worten werden die Halbleiterschalter gepulst betrieben. Bei jedem Schaltvorgang liegt an jedem der Halbleiterschalter ein vergleichsweise hoher Wert der elektrischen Spannung und des elektrischen Stroms an, was zu Verlusten, sogenannten Schaltverlusten führt. Daher ist die Verlustleistung des vollständigen Umrichters abhängig von der Anzahl der Schaltvorgänge ist.
Bei vergleichsweise niedrigen Schaltfrequenzen jedoch weist der mittels des Umrichters erstellte elektrische Wechselstrom eine vergleichsweise hohe Welligkeit auf, also vergleichsweise ausgeprägte Oberschwingungen, sodass die Drehzahl des Elektromotors ebenfalls nicht konstant ist, sondern ebenfalls eine derartige Oberschwingung aufweist. Dies führt aufgrund der im Wesentlichen kontinuierlichen Beschleunigung und Abbremsung und somit entstehenden Schwingungen zu einer vergleichsweise hohen mechanischen Belastung. Auch sind bei einer vergleichsweise niedrigen Schaltfrequenz die Schaltvorgänge für das menschliche Ohr hörbar, so dass ein Arbeiten im Umfeld eines derartigen Umrichters vergleichsweise unangenehm ist.

Aus der DE 10 2010 008 426 B4 ist ein 3-Stufen-Pulswechselrichter nach dem Oberbegriff des Anspruchs 1, mit einem Entlastungsnetzwerk bekannt. Das Entlastungsnetzwerk weist zwei Kondensatoren und eine Induktivität auf. Aufgrund geeigneter Anordnung liegt bei jedem Schaltvorgang der Halbleiterschalter nicht gleichzeitig sowohl ein hoher elektrischer Strom und eine hohe elektrische Spannung an diesen an. Hierbei wird die bei einer Unterbrechung des Stromflusses mittels des Halbleiterschalters entstehende elektrische Spannung vergleichsweise langsam aufgebaut. Infolgedessen sind prinzipienbedingt im Wesentlichen keine Verluste vorhanden. Jedoch ist ein bidirektionaler Schalter erforderlich, der zwei Halbleiterschalter und zwei Dioden umfasst. Folglich ist stets ein elektrischer Stromfluss über eine Diode und einen Halbleiterschalter vorhanden, was die Durchlassverluste erhöht. Diese Halbleiterschalter tragen zudem den vollen elektrischen Strom, weswegen diese im Wesentlichen gleichartig zu den bereits vorhandenen Halbleiterschaltern ausgeführt werden müssen. Folglich weist der Umrichter die doppelte Anzahl an vergleichsweise kostenintensiven Halbleiterschaltern auf, was die Herstellungskosten erhöht.

In DE 693 13 340 T2 sind eine Steuereinrichtung für Leistungskonverter und eine Steuereinrichtung für Fahrzeuge mit elektrischem Motor offenbart. Mittels der Steuereinrichtung wird eine Wärmeerzeugungsverteilung ausgeglichen.

In EP 2 110 322 A1 ist ein Verfahren zur Erstellung von Ansteuersignalen eines 3-Level Umrichters anhand der Signale eines 2-Level Umrichters offenbart.

Aus DE 38 85 737 T2 ist ein Verfahren zur Impulsbreitenmodulation bekannt, das für die Steuerung von Spannungswechselrichtern verwendet werden kann. Hierbei wird von einem diskreten unteren Niveau über ein diskretes Zwischenniveau auf ein diskretes oberes Niveau und umgekehrt umgeschaltet.

Der Erfindung liegt die Aufgabe zugrunde, einen Umrichter anzugeben, bei dem geeigneterweise Schaltverluste und Herstellungskosten reduziert sind.

Diese Aufgabe wird durch die Merkmale des Anspruches 1 erfindungsgemäß gelöst. Vorteilhafte Weiterbildungen und Ausgestaltungen sind Gegenstand der jeweiligen Unteransprüche.

Der 3-Level-Umrichter weist einen oberen Zweig, einen unteren Zweig und einen mittleren Zweig auf. Jeder der Zweige ist gegen einen Ausgang geführt, mit dem beispielsweise eine Last elektrisch angebunden ist. Mit anderen Worten ist die Last mit dem Ausgang elektrisch kontaktiert. Jeder der Zweige weist ein Schaltelement (Schalter) auf, der insbesondere ein Halbleiterschalter ist. Das verbleibende Ende des oberen Zweiges ist gegen ein oberes elektrisches Potential geführt, der untere Zweig ist auf der dem Ausgang abgewandten Seite gegen ein unteres elektrisches Potential geführt und der mittlere Zweig ist auf der dem Ausgang gegenüberliegenden Seite gegen ein mittleres elektrisches Potential geführt. Das obere elektrische Potential ist insbesondere größer als das untere elektrische Potential, und das mittlere elektrische Potential liegt zwischen dem oberen und dem unteren elektrischen Potential. Zweckmäßigerweise ist der Betrag des oberen und des unteren elektrischen Potentials gleich und das mittlere elektrische Potential ist geeigneterweise gleich Masse, und insbesondere Erde.

Der Umrichter ist gemäß einem Verfahren betrieben, bei dem in einem ersten Arbeitsschritt von dem oberen Zweig auf den mittleren Zweig kommutiert wird. Unter Kommutieren wird hierbei verstanden, dass der Stromfluss über den einen Zweig unterbrochen und ein Stromfluss über den weiteren Zweig erstellt wird. Mit anderen Worten wird die elektrische Leitfähigkeit des einen Zweigs unterbrochen und des anderen erstellt. Hierfür werden geeigneterweise die jeweiligen Schaltelemente des Zweigs geeignet angesteuert. Folglich ist der Ausgang zunächst mit dem oberen elektrischen Potential elektrisch kontaktiert und nach dem Kommutieren mit dem mittleren elektrischen Potential. In einem weiteren Arbeitsschritt wird von dem mittleren Zweig auf den unteren Zweig kommutiert. Somit ist nach erfolgter Kommutierung das untere elektrische Potential mittels des unteren Zweigs mit dem Ausgang elektrisch kontaktiert, und der Ausgang befindet sich auf dem unteren elektrischen Potential. Zweckmäßigerweise erfolgt die Kommutierung von dem mittleren auf den unteren Zweig zeitlich direkt nachfolgend nach der Kommutierung von dem oberen auf den mittleren Zweig.

Folglich ist der Ausgang nach Ausführen der beiden Arbeitsschritte auf dem unteren elektrischen Potential, wobei sich der Ausgang vor Ausführung der beiden Arbeitsschritte auf dem oberen elektrischen Potential befand. Somit wird das Potential des Ausgangs von dem oberen elektrische Potential auf das untere elektrische Potential geändert, wobei an jedem Schaltelement der Zweige lediglich maximal eine Potentialänderung von dem oberen elektrische Potential auf das mittlere elektrische Potential bzw. von dem mittleren elektrische Potential auf das untere elektrische Potential anliegt. Aufgrund der verringerten, bei jedem Schaltvorgang über die Schaltelemente anliegenden elektrischen Spannung ist folglich der Verlust reduziert. Zudem treten lediglich vergleichsweise geringe Spannungsspitzen auf, weswegen eine Belastung der Last und/oder etwaiger Leitungen zwischen der Last und dem Umrichter verringert ist.

Zweckmäßigerweise wird im Anschluss an die Kommutierung auf den unteren Zweig erneut auf den mittleren Zweig, und von dem mittleren Zweig erneut auf den oberen Zweig elektrisch kommutiert, wobei dies insbesondere jeweils zeitlich direkt nachfolgend erfolgt. Geeigneterweise wird das Verfahren zum Betrieb des Umrichters so lange wiederholt, solange eine Anforderung an die mit dem Ausgang elektrisch verbundene Last besteht. Zusammenfassend wird von dem oberen auf den mittleren, von dem mittleren auf den unteren, von dem unteren auf den mittleren, von dem mittleren auf den oberen, von dem oberen auf den mittleren, von dem mittleren auf den unteren Zweig, ... jeweils zeitlich direkt nachfolgend elektrisch kommutiert. Auf diese Weise wird eine etwaige mit dem Ausgang elektrisch kontaktierte Last mit einer Wechselspannung beaufschlagt, die eine vergleichsweise große Amplitude aufweist, wobei die Schaltverluste vergleichsweise gering sind. Je nach Einstellung des Schaltverhältnisses ist hierbei die der Last zugeführte Energie vergleichsweise genau einstellbar. Insbesondere ist die Frequenz der Kommutierung zwischen 10kHz und 30kHz und zweckmäßigerweise größer oder gleich 15kHz oder 18kHz und beispielsweise kleiner oder gleich 25kHz oder 20kHz.

Besonders bevorzugt ist die Zeitspanne der Stromführung mittels des mittleren Zweigs kleiner als die Zeitspanne der Stromführung mittels des unteren und/oder oberen Zweigs. Besonders bevorzugt ist die Zeitspanne der Stromführung mittels des unteren Zweigs gleich der Zeitspanne der Stromführung mittels des oberen Zweigs, und die Zeitspanne der Stromführung mittels des mittleren Zweigs ist zweckmäßigerweise kleiner als 10%, 5%, 2%, 1% der Zeitspanne der Stromführung mittels des unteren und/oder oberen Zweigs. Mit anderen Worten wird nach der Kommutierung auf den mittleren Zweig nach einer vergleichsweise kurzen Zeitspanne bereits auf den unteren bzw. oberen Zweig weiter kommutiert. Infolgedessen ist die mittels des mittleren Zweiges geführte Leistung zwar gleich der mittels des unteren und/oder oberen Zweigs geführten elektrischen Leistung. Die Energie ist jedoch geringer, so dass die Komponenten des mittleren Zweigs thermisch vergleichsweise gering belastet werden. Folglich können Bauelemente für den mittleren Zweig gewählt werden, die lediglich eine geringen Nominalstrom und/oder eine geringe maximale Betriebstemperatur und eine geringe thermische Belastungsgrenze aufweisen, also eine Temperatur, ab der die Bauelemente thermisch versagen. Somit ist es ermöglicht, vergleichsweise kostengünstige Bauelemente zur Realisierung des mittleren Zweigs zu verwenden, wobei dennoch die Schaltverluste vergleichsweise gering sind. Insbesondere ist die Zeitspanne der Stromführung mittels des mittleren Zweigs konstant, wohingegen die Zeitspanne der Stromführung mittels des unteren und/oder oberen Zweigs anhand einer Leistungsanforderung gewählt wird.

Zweckmäßigerweise wird direkt von dem oberen Zweig auf den unteren Zweig elektrisch kommutiert, falls eine Leistungsanforderung an den Umrichter größer als ein Grenzwert ist. Der Grenzwert ist insbesondere die maximale Leistung, die mittels Kommutierung von dem oberen auf den mittleren und anschließend auf den unteren Zweig mittels des Umrichters bereitstellbar ist. Sofern die Leistungsanforderung diesen Wert überschreitet, wird direkt von dem oberen auf den unteren Zweig kommutiert, und insbesondere von dem unteren auf den oberen Zweig. Auf diese Weise ist die Zeit verkürzt, die zum Anlegen des oberen bzw. unteren Potentials an den Ausgang benötigt wird, so dass die Leistungsabgabe des Umrichters erhöht werden kann. Hierbei treten zwar vergleichsweise hohe Verluste aufgrund der Schaltvorgänge auf, jedoch ist somit mittels des Umrichters auch eine erhöhte Leistungsabgabe ermöglicht. Mit anderen Worten wird der 3-Level-Umrichter nach Art eines 2-Level-Umrichters betrieben.

Der Umrichter weist einen Ausgang, einen positiven Pol, einen negativen Pol und einen Mittelabgriff auf. Hierbei ist bei Betrieb des Umrichters der positive Pol auf einem im Vergleich zum negativen Pol größeren elektrischen Potential. Das elektrische Potential des Mittelabgriffs befindet sich zwischen dem elektrischen Potential des positiven und des negativen Pols. Beispielsweise ist der Mittelabgriff mit Masse, insbesondere mit Erde, elektrisch kontaktiert. Mit anderen Worten ist das elektrische Potential des Mittelabgriffs gleich Masse. Zweckmäßigerweise ist bei Betrieb des Umrichters die elektrische Spannung zwischen dem positiven Pol und dem Mittelabgriff gleich dem Betrag der elektrischen Spannung zwischen dem negativen Pol und dem Mittelabgriff. Beispielsweise ist die elektrisch Spannung zwischen dem Mittelabgriff und dem jeweiligen Pol größer oder gleich 300 V, 500 V, 700 V, 900 V oder 1100 V. Vorzugsweise ist die elektrisch Spannung zwischen dem Mittelabgriff und dem jeweiligen Pol kleiner oder gleich 400 V, 600 V, 800 V, 1100 V oder 1200 V.

Der positive Pol ist mittels eines oberen Zweigs mit dem Ausgang elektrisch kontaktiert. Der obere Zweig umfasst ein erstes Schaltelement, mittels dessen ein Stromfluss zwischen dem positiven Pol und dem Ausgang zumindest teilweise einstellbar ist. Der negative Pol ist mittels eines unteren Zweiges elektrisch mit dem Ausgang kontaktiert, wobei der untere Zweig ein zweites Schaltelement aufweist. Mittels des zweiten Schaltelements ist ein Stromfluss zwischen dem Ausgang und dem negativen Pol zumindest teilweise einstellbar. Das erste oder zweite Schaltelement ist jeweils ein Schalter, mittels dessen ein Stromfluss bevorzugt lediglich in eine Richtung schaltbar ist. Zweckmäßigerweise wird ein Stromfluss in die entgegengesetzte Richtung geeigneterweise mittels des jeweiligen Schaltelements nicht beeinflusst. Mit anderen Worten wird bei einem nicht aktivierten ersten und/oder zweiten Schaltelement, also dem jeweiligen geöffneten Schalter, ein elektrischer Stromfluss in eine Vorzugsrichtung unterbrochen. Ein elektrischer Stromfluss entgegen der jeweiligen Vorzugsrichtung ist hierbei zweckmäßigerweise unabhängig vom Status des Schaltelements, also ob der Schalter geöffnet oder geschlossen ist. Insbesondere wird mittels des ersten Schaltelements ein elektrischer Strom in technischer Stromrichtung von dem positiven Pol zu dem Ausgang geschaltet. Beispielseise wird mittels des zweiten Schaltelements ein elektrischer Stromfluss von dem Ausgang zu dem negativen Pol geschaltet.

Der Mittelabgriff ist mittels eines mittleren Zweigs mit dem Ausgang elektrisch kontaktiert, wobei der mittlere Zweig einen bidirektionalen Schalter aufweist. Mittels des bidirektionalen Schalters ist sowohl ein elektrischer Stromfluss von dem Ausgang zu dem Mittelabgriff als auch von dem zu dem Mittelabgriff zu dem Ausgang einstellbar. Mit anderen Worten ist mittels des bidirektionalen Schalters ein elektrischer Stromfluss über den mittleren Zweig unabhängig von der technischen Stromrichtung schaltbar, also unterbrech- und erstellbar. Folglich ist der Umrichter ein 3-Level-Umrichter, wobei die drei Level mittels des positiven Pols, des Mittelabgriffs und des negativen Pols realisiert sind. Insbesondere sind der positive Pol und der Mittelabgriff und/oder der Mittelabgriff und der negative Pol mittels eines Kondensators miteinander elektrisch kontaktiert, insbesondere eines Elektrolytkondensators.

Bei Betrieb wird von dem oberen Zweig auf den mittleren Zweig und von dem mittleren Zweig auf den unteren Zweig elektrisch kommutiert. Mit anderen Worten ist bei Betrieb zunächst lediglich das erste Schaltelement aktiviert, sodass ein Stromfluss zwischen dem positiven Pol und dem Ausgang besteht. Nach erfolgter Kommutierung besteht ein elektrischer Stromfluss zwischen dem Mittelabgriff und dem Ausgang. Mit anderen Worten ist lediglich der bidirektionale Schalter aktiviert, wobei das erste und zweite Schaltelement derart angesteuert sind, dass diese sperren. Nach erfolgter Kommutierung auf den unteren Zweig besteht lediglich ein Stromfluss über den unteren Zweig, und insbesondere von dem negativen Pol zu dem Ausgang, sofern eine etwaige mit dem Ausgang elektrisch verbundene Last eine ausreichende Induktivität aufweist. Sowohl das erste Schaltelement als auch der bidirektionale Schalter sind hierbei derart angesteuert, dass ein elektrischer Stromfluss über diese nicht möglich ist. Nach erfolgter Kommutierung auf den unteren Zweig wird auf den mittleren Zweig und im Anschluss auf den oberen Zweig kommutiert. Hierbei wird zeitlich direkt nachfolgend nach der Kommutierung auf den mittleren Zweig stets auf den Zweig kommutiert, der vor erfolgter Kommutierung auf den mittleren Zweig nicht Strom führend war. Mit anderen Worten wird von dem oberen Zweig auf den unteren Zweig kommutiert, wobei als Zwischenstufe stets der mittlere Zweig verwendet wird. Auch bei einer Kommutierung von dem unteren Zweig auf den oberen Zweig wird zunächst der mittlere Zweig als Zwischenstufe verwendet.

Zweckmäßigerweise ist hierbei die Zeitdauer, während der auf dem mittleren Zweig kommutiert ist, geringer als die Zeitdauer, während der der obere und/oder untere Zweig Strom führend ist. Zweckmäßigerweise beträgt die Zeitdauer weniger oder gleich 10%, 5%, 2%, 1%, 0,5% der Zeitdauer der elektrischen Stromführung mittels des oberen und/oder unteren Zweigs. Folglich wird mittels des 3-Level-Umrichters im Wesentlichen der Betrieb eines 2-Level-Umrichters realisiert, wobei die bei Ansteuerung des ersten und/oder zweiten Schaltelements auftretenden elektrischen Spannungen im Vergleich zu einem 2-Level-Umrichter reduziert sind. Infolgedessen sind die Schaltverluste reduziert und der Wirkungsgrad des Umrichters erhöht. Folglich kann der Umrichter auch bei einer vergleichsweise hohen Schaltfrequenz mit vergleichsweise geringen Verlusten betrieben werden. Insbesondere ist die Schaltfrequenz zwischen 15 kHz und 20 kHz und bevorzugt größer als 18 kHz.

Beispielsweise wird mittels des Umrichters eine Wechselspannung in eine Gleichspannung oder eine Gleichspannung in eine Wechselspannung transformiert. Mit anderen Worten ist der Umrichter entweder ein Wechsel- oder ein Gleichrichter. Beispielsweise ist der Umrichter dreiphasig aufgebaut. Hierfür umfasst der Umrichter zweckmäßigerweise drei Ausgänge, wobei jeder der nunmehr drei Ausgänge mittels eines jeweils zugeordneten oberen, mittleren und unteren Zweigs sowie deren jeweiligen Schaltelemente bzw. bidirektionalen Schalter miteinander elektrisch kontaktiert sind. Mit anderen Worten umfasst der Umrichter in diesem Fall drei erste Schaltelemente, drei zweite Schaltelemente sowie drei bidirektionale Schalter.

Geeigneterweise ist das erste Schaltelement mittels eines ersten Kondensators überbrückt, der in Reihe zu einer ersten Diode geschaltet ist. Die Sperrrichtung der Dioden ist hierbei geeigneterweise gleich zu der Schaltrichtung des ersten Schaltelements. Mit anderen Worten ist ein Stromfluss über die Diode in die Richtung, in die der elektrische Strom mittels des Schaltelements geschaltet werden kann, nicht möglich. Ferner ist der bidirektionale Schalter mittels des ersten Kondensators ebenfalls überbrückt, wobei die Brückenschaltung eine dritte Diode aufweist. Insbesondere ist die dritte Diode in Reihe zu der ersten Diode geschaltet, wobei zwischen diesen der erste Kondensator einseitig elektrisch kontaktiert ist. Beispielsweise ist die Sperrrichtung der ersten und der dritten Diode gleich. Zweckmäßigerweise ist das erste Schaltelement mit keinen weiteren elektrischen und/oder elektronischen Bauelementen überbrückt. Vorzugsweise ist zur Überbrückung des ersten Schaltelements zu der ersten Diode und dem ersten Kondensator kein weiteres elektrisches und/oder elektronisches Bauelement, zumindest jedoch keine weitere Induktivität und/oder Kapazität in Reihe geschaltet.

Vorzugsweise ist das zweite Schaltelement mittels eines in Reihe zu einer zweiten Diode geschalteten zweiten Kondensators überbrückt, wobei der bidirektionale Schalter mittels des zweiten Kondensators ebenfalls überbrückt ist, der jedoch in Reihe zu einer vierten Diode hierbei geschaltet ist. Mit anderen Worten sind die zweite und die vierte Diode in Reihe geschaltet, wobei zwischen diesen eine Seite des zweiten Kondensators elektrisch kontaktiert ist. Die Sperrrichtung der zweiten und vierten Diode ist insbesondere gleich und vorzugsweise gleich zu der Schaltrichtung des zweiten Schaltelements.

Mittels des ersten und zweiten Kondensators ist jeweils ein elektrischer Energiespeicher realisiert, mittels derer bei einem Schalten des ersten bzw. zweiten Schaltelements, das zu einer Unterbrechung eines Stromflusses durch das Schaltelement führt, noch weiterhin ein vergleichsweise kurzer Stromfluss fortbesteht, was zu einem zeitlich verzögerten Aufbau der elektrischen Spannung führt. Mit anderen Worten ist mittels des ersten und zweiten Kondensators ein Entlastungsnetzwerk geschaffen, so dass bei Betätigung des ersten oder zweiten Schaltelements an diesen nicht zeitgleich eine hohe Stromänderung und Spannungsänderung anliegt. Zweckmäßigerweise ist der erste Kondensator gleichartig zu dem zweiten Kondensator aufgebaut, weist also die gleiche Kapazität und den gleichen Aufbau auf. Insbesondere ist die erste Diode, die zweite Diode, die dritte Diode und die vierte Diode gleichartig aufgebaut. Auf diese Weise ist es ermöglicht, vergleichsweise viele Gleichteile zur Montage des Umrichters zu verwenden, was zu verringerten Kosten führt.

Insbesondere ist der Mittelabgriff mittels einer Induktivität mit dem bidirektionalen Schalter elektrisch kontaktiert. Mit anderen Worten ist der bidirektionale Schalter zwischen die Induktivität und den Ausgang geschaltet, und die Induktivität ist in Reihe zu dem bidirektionalen Schalter geschaltet. Vorzugsweise ist in Reihe zwischen dem Mittelabgriff und dem Ausgang keine weitere Induktivität oder Kapazität zu dem bidirektionalen Schalter geschaltet. Mittels der Induktivität wird einerseits eine Begrenzung der Stromänderung realisiert, was zu verminderten elektrischen Verlusten führt. Andererseits wird mittels der Induktivität im Zusammenspiel mit dem ersten, zweiten Kondensator sowie der Dioden ein Fortbestand eines elektrischen Stromflusses bei der Kommutierung sichergestellt, so dass die elektrischen Verluste weiter reduziert sind.

Geeigneterweise ist das erste Schaltelement gleichartig zu dem zweiten Schaltelement aufgebaut. Insbesondere weist das erste Schaltelement und das zweite Schaltelement jeweils einen Halbleiterschalters auf, der jeweils insbesondere mittels einer Freilaufdiode überbrückt ist. Hierbei ist die Sperrrichtung der Freilaufdiode parallel zu der Richtung des elektrischen Stroms, der mittels des Halbleiterschalters geschaltet werden kann. Mit anderen Worten ist ein Stromfluss über die jeweilige Freilaufdiode nicht in die Richtung möglich, in die ein Stromfluss mit dem jeweilige Halbleiterschalter schaltbar ist. Insbesondere ist die Sperrrichtung der jeweiligen Freilaufdiode parallel zur Sperrrichtung der ersten bzw. dritten Diode. Geeigneterweise ist der Halbleiterschalter ein IGBT, ein MOSFET, ein GTO, ein JFET, ein IGCT oder ein sonstiger Feldeffekttransistor oder sonstiger Thyristor. Das Grundmaterial des Halbleiterschalters ist beispielsweise Silizium, Siliziumcarbid, Galliumarsenid oder Galliumnitrid. Zweckmäßigerweise ist das erste und zweite Schaltelement geeignet, einen elektrischen Strom und eine elektrische Spannung zu schalten, die größer als 1 Ampere und 24 Volt sind. Zweckmäßigerweise ist die schaltbare elektrische Spannung hierbei größer oder gleich 100 Volt, 500 Volt, 600 Volt, 700 Volt, 800 Volt, 1000 Volt, 1100 Volt, 1200 Volt, 1300 Volt, 1400 Volt, 1500 Volt.

Vorzugsweise umfasst der bidirektionale Schalter zwei zueinander parallel geschaltete Pfade, wobei jeder Pfad einen mit einer Diode in Reihe geschalteten Halbleiterschalter aufweist. Hierbei ist die Sperrrichtung insbesondere entgegengesetzt zur Schaltrichtung des jeweiligen Halbleiterschalters. Auf diese Weise ist eine Beschädigung der jeweiligen Halbleiterschalter ausgeschlossen. Zweckmäßigerweise sind die beiden Pfade zueinander antiparallel geschaltet. Mit anderen Worten ist die Durchlassrichtung der beiden Dioden der beiden Pfade antiparallel zueinander, so dass bei geeigneter Ansteuerung der Halbleiterschalter ein Stromfluss in beide Richtungen durch den bidirektionalen Schalter ermöglicht ist. Zweckmäßigerweise ist der eine der beiden Halbleiterschalter mittels der Diode des verbleibenden Pfades überbrückt, so dass der bidirektionale Schalter mittels zueinander antiparallel in Reihe geschalteter Halbleiterschalter mit Freilaufdiode realisiert werden kann. Auf diese Weise ist es ermöglicht, standardisierte Bauelemente zur Realisierung des bidirektionalen Schalters heranzuziehen, was die Herstellungskosten verringert.

In einer besonders bevorzugten Ausführungsform der Erfindung weist der bidirektionale Schalter einen Brückengleichrichter auf, der insbesondere mittels Dioden realisiert ist. Hierbei weist der Brückengleichrichter bevorzugt vier Dioden auf. Der bidirektionale Schalter umfasst zwei Pfade, von denen jeder zwei zueinander antiparallel geschaltete Dioden aufweist. Ein Halbleiterschalter ist mit jedem der beiden Pfade zwischen jeweils den beiden Dioden elektrisch kontaktiert. Somit ist es ermöglicht, mittels des einen einzigen Halbleiterschalters einen elektrischen Stromfluss in beide Richtungen zu schalten. Auf diese Weise sind die Materialkosten des Umrichters weiter reduziert. Der oder die Halbleiterschalter des bidirektionalen Schalters sind zweckmäßigerweise Feldeffekttransistoren, wie MOSFET, JFET oder IGBT oder aber Thyristoren, wie GTO. Vorzugsweise ist der jeweilige Halbleiterschalter aus einem Silizium erstellt. Beispielsweise sind die Halbleiterschalter des bidirektionalen Schalters gleichartig zu den Halbleiterschaltern des ersten und/oder zweiten Schaltelements, sofern diese Halbleiterschalter aufweisen. Auf diese Weise ist es ermöglicht, vergleichsweise viele Gleichteile zur Erstellung des Umrichters zu verwenden, was die Herstellungskosten reduziert.

Besonders bevorzugt jedoch weist das erste Schaltelement und das zweite Schaltelement einen höheren Nominalstrom auf als der bidirektionalen Schalter. Mit anderen Worten ist es möglich, mittels des ersten und zweiten Schaltelements einen höheren elektrischen Strom zu schalten. Insbesondere ist der, vorzugsweise maximale, Kollektorstrom des ersten und zweiten Schaltelements größer als der, vorzugsweise maximale, Kollektorstrom des bidirektionalen Schalters. Da mit dem bidirektionalen Schalter lediglich für eine vergleichsweise kurze Zeitspanne elektrischer Strom geführt wird, ist eine thermische Belastung vergleichsweise gering, sodass für einen sicheren Betrieb ein vergleichsweise geringer Nominalstrom ausreichend ist. Somit ist es ermöglicht, einen vergleichsweise kostengünstigen bidirektionalen Schalter zu verwenden. Vorzugsweise ist der bidirektionalen Schalter thermisch für geringere effektive elektrische Ströme ausgelegt. Beispielsweise weist das erste Schaltelement und das zweite Schaltelement eine höhere maximale Betriebstemperatur als der bidirektionale Schalter auf. Mit anderen Worten ist die thermische Resistenz, also die thermische Belastungsgrenze des ersten und des zweiten Schaltelements größer als die korrespondierende des bidirektionalen Schalters. Folglich ist ein Versagen der Funktionsweise des ersten und zweiten Schaltelements erst bei einer Temperatur zu erwarten, bei der das bidirektionale Schaltelement bereits beschädigt ist. Auf diese Weise ist es ermöglicht, vergleichsweise kostengünstige Bauelemente zur Realisierung des bidirektionalen Schalters zu verwenden, was die Herstellungskosten des Umrichters senkt. Da der mittlere Zweig mit dem bidirektionalen Schalter lediglich für vergleichsweise kurze Zeitspannen elektrischen Strom führt, ist eine Erwärmung des bidirektionalen Schalters sowie dessen Bauelemente vergleichsweise gering, obwohl die Stromstärke im Wesentlichen der mit dem ersten und zweiten Zweig geführten Stromstärke entspricht.

Der Umrichter dient vorzugsweise dem Betrieb einer elektrischen Maschine, insbesondere eines Elektromotors. Geeigneterweise ist der Umrichter Bestandteil einer Industrieanlage. Insbesondere weist der Umrichter eine maximale Leitungsabgabe zwischen 700 W und 500 kW auf. Zweckmäßigerweise ist die Leitungsabgabe größer oder gleich 1 kW, 5 kW, 10 kW, 50 kW, 100 kW oder 200 kW. Zum Beispiel ist die Leitungsabgabe kleiner oder gleich 400 kW, 250 kW, 100 kW, 50 kW, 15 kW oder 2 kW.

Nachfolgend werden Ausführungsbeispiele der Erfindung anhand einer Zeichnung näher erläutert. Darin zeigen:
- Fig. 1: einen Umrichter mit einem positiven Pol, einem negativen Pol, einem Mittelabgriff und drei Ausgängen,
- Fig. 2: schematisch ausschnittsweise einen der Ausgänge, der mittels eines ersten Schaltelements mit dem positiven Pol, mittels eines zweiten Schaltelements mit dem negativen Pol und mittels eines bidirektionalen Schalters mit dem Mittelabgriff elektrisch kontaktiert ist,
- Fig. 3a, 3b: weitere Ausführungsformen des bidirektionalen Schalters,
- Fig. 4: schematisch vereinfacht ein Verfahren zum Betrieb des Umrichters, und
- Fig. 5a-5m: den Stromverlauf durch den Umrichter gemäß Fig. 2 bei Ausführung des Verfahrens gemäß Fig. 4.

Einander entsprechende Teile sind in allen Figuren mit den gleichen Bezugszeichen versehen.

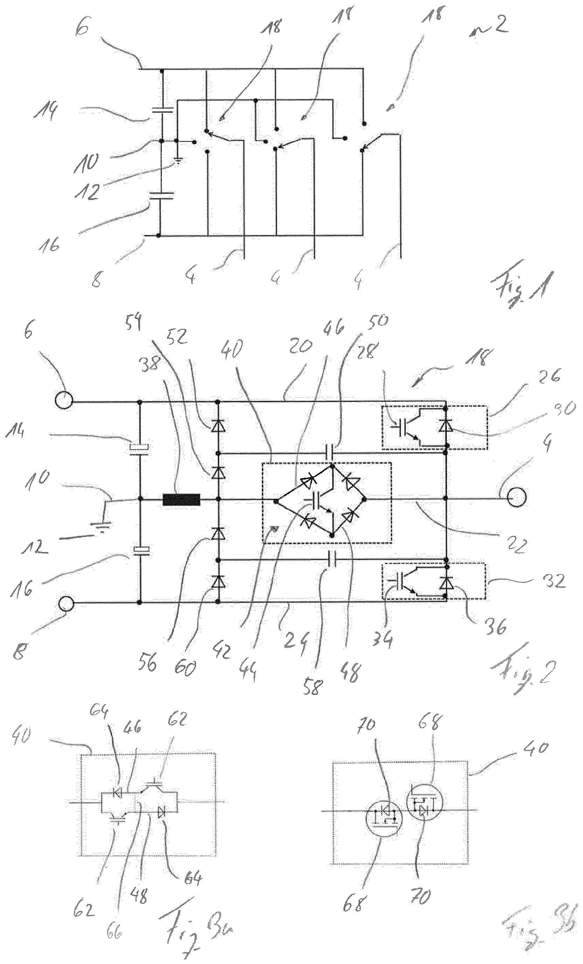

In Fig. 1 ist schematisch ein Umrichter 2 mit drei Ausgängen 4 dargestellt. Mit anderen Worten ist der Umrichter 2 dreiphasig. Der Umrichter 2 umfasst ferner einen positiven Pol 6, einen negativen Pol 8 und einen Mittelabgriff 10. Das Potential des Mittelabgriffs 10 ist hierbei Erde 12, wohingegen der positive Pol 6 ein positives elektrisches Potential und der negative Pol 8 ein negatives elektrisches Potential aufweist. Die elektrische Spannung zwischen dem positiven Pol 6 und dem negativen Pol 8 beträgt 1000 Volt. Die elektrische Spannung zwischen dem positiven Pol 6 und dem Mittelabgriff 10 ist gleich 500 Volt und zwischen dem Mittelabgriff 10 und dem negativen Pol 8 ebenfalls gleich 5000 Volt. Bei Betrieb des Umrichters 2 ist diese elektrische Spannung konstant, was mittels geeigneter Speisung durch eine mit einem Versorgungsnetz gekoppelte, nicht dargestellte Gleichrichterseite erfolgt.

Zudem ist zwischen dem Mittelabgriff 10 und dem positiven Pol 6 ein erster Zwischenkreiskondensator 14 und zwischen dem Mittelabgriff 10 und dem negativen Pol 8 ein zweiter Zwischenkreiskondensator 16 elektrisch angeordnet, mittels derer die elektrische Spannung im Wesentlichen konstant gehalten wird. Jeder der Ausgänge 4 ist mittels einer Anordnung 18 entweder auf das elektrische Potential des positiven Pols 6, das elektrische Potential des Mittelabgriffs 10 oder das elektrische Potential des negativen Pols 8 bringbar. Mit anderen Worten sind mittels des Umrichters 2 drei Level realisiert, so dass der Umrichter 2 ein 3-Level-Umrichter ist. Die einzelnen Ausgänge 4 werden mittels eines Wechselstroms beaufschlagt, die zu einer Speisung eines nicht näher dargestellten Elektromotors dienen.

In Fig. 2 ist die Anordnung 18 des Umrichters 2 näher dargestellt. Hierbei ist es auch möglich, dass der Umrichter 2 lediglich eine einzige der Anordnungen 18 aufweist, so dass der Umrichter 2 einphasig ist. Ferner sind der erste und der zweite Zwischenkreiskondensator 14,16 durch einen Elektrolytkondensator ersetzt. Der positive Pol 6 ist mittels eines oberen Zweigs 20, der Mittelabgriff 10 mittels eines mittleren Zweigs 22 und der negative Pol 8 mittels eines unteren Zweigs 24 elektrisch mit dem Ausgang 4 kontaktiert. Der obere Zweig 20 umfasst hierbei ein erstes Schaltelement 26, das einen Halbleiterschalter 28 in Form eines IGBTs und einer hierzu parallel geschalteten Freilaufdiode 30 umfasst. Die Anode der Freilaufdiode ist elektrisch mit dem Emitter des Halbleiterschalters 28 und die Kathode mit dem Kollektor des Halbleiterschalters 28 elektrisch kontaktiert. Der Kollektor des Halbleiterschalters 28 ist auf dem elektrischen Potential des positiven Pols 6 und der Emitter auf dem elektrischen Potential des Ausgangs 4. Mittels des ersten Schaltelements 26 ist es daher mittels geeigneter Ansteuerung des Halbleiterschalters 28 möglich, einen Stromfluss von dem positiven Pol 6 zu dem Ausgang 4 zu erstellen.

Der untere Zweig 24 umfasst ein zweites Schaltelement 32, das gleichartig zu dem ersten Schaltelement aufgebaut ist. Mit anderen Worten umfasst das zweite Schaltelement 32 ebenfalls einen Halbleiterschalter 34 in Form eines IGBTs und eine hierzu parallel geschaltete Freilaufdiode 36, deren Anode mit dem Emitter des Halbleiterschalters 34 des zweiten Schaltelements elektrisch kontaktiert ist. Mit anderen Worten sind das erste Schaltelement 26 und das zweite Schaltelement 32 baugleich. Hierbei befindet sich die Anode der Freilaufdiode des zweiten Schaltelements 32 auf dem elektrischen Potential des negativen Pols 8 und die Kathode der Freilaufdiode 36 des zweiten Schaltelements 32 auf dem elektrischen Potential des Ausgangs 4.

Der mittlere Zweig 22 umfasst eine Induktivität 38 in Form einer Drossel, die in Reihe zu einem bidirektionalen Schalter 40 geschaltet ist. Der bidirektionale Schalter 40 befindet sich elektrisch zwischen der Induktivität 38 und dem Ausgang 4. Der bidirektionale Schalter 40 umfasst einen Brückengleichrichter 42 mit einem dazwischen geschalteten Halbleiterschalter 44 in Form eines IGBTs. Mit anderen Worten weist der Brückengleichrichter 42 einen ersten Pfad 46 und einen zweiten Pfad 48 auf, die zueinander parallel geschaltet sind. Der erste Pfad 46 weist zwei in Reihe geschaltete Dioden auf, deren Kathoden miteinander elektrisch kontaktiert sind. Der zweite Pfad 48 umfasst ebenfalls zwei in Reihe geschaltete Dioden, deren Anoden jedoch miteinander elektrisch kontaktiert sind. Der Emitter des Halbleiterschalters 44 ist elektrisch mit den Anoden der Dioden des zweiten Pfads und der Kollektor des Halbleiterschalters 44 mit den Kathoden der Dioden des ersten Pfads 46 elektrisch kontaktiert. Der Nominalstrom des Halbleiterschalters 44 des bidirektionalen Schalters 40 ist geringer als der Nominalstrom der Halbleiterschalter 28, 34 des ersten bzw. zweiten Schaltelements 26, 32.

Das erste Schaltelement 26 ist mittels eines ersten Kondensators 50 und einer ersten Diode 52 überbrückt, die zueinander in Reihe geschaltet sind. Die Kathode der ersten Diode 42 und die Kathode der Freilaufdiode 30 des ersten Schaltelements 26 befinden sich auf dem gleichen elektrischen Potential, wohingegen eine der Elektroden des ersten Kondensators 50 das gleiche elektrische Potential wie der Emitter des Halbleiterschalters 28 des ersten Schaltelements 26 aufweist, also das elektrische Potential des Ausgangs 4. Mit der Anode der ersten Diode 52 ist die Kathode einer dritten Diode 54 elektrisch kontaktiert, deren Anode elektrisch zwischen dem bidirektionalen Schalter 40 und der Induktivität 38 mit dem mittleren Zweig 22 elektrisch kontaktiert ist. Mit anderen Worten ist der bidirektionale Schalter 40 mittels des der dritten Diode 54 und dem ersten Kondensator 50 überbrückt, die zueinander in Reihe geschaltet sind.

Der bidirektionale Schalter 40 ist ferner mittels einer vierten Diode 56 und einem hierzu in Reihe geschalteten zweiten Kondensator 58 überbrückt, wobei die Kathode der vierten Diode 56 elektrisch mit der Anode der dritten Diode und die Anode der vierten Diode 56 mit einer der Elektroden des zweiten Kondensators 58 elektrisch kontaktiert ist. Die verbleibende Elektrode des zweiten Kondensators 58 ist elektrisch mit dem Ausgang 4 kontaktiert, so dass diese im stationären Fall das gleiche elektrische Potential wie der Ausgang 4 aufweist. Die Anordnung 18 umfasst ferner eine zweite Diode, deren Kathode mit der Anode der vierten Diode elektrisch kontaktiert ist. Die Anode der zweiten Diode 60 ist elektrisch mit dem negativen Pol 8 kontaktiert. Mit anderen Worten ist das zweite Schaltelement 32 mittels der zweiten Diode 60 und des hierzu in Reihe geschalteten zweiten Kondensators 58 überbrückt.

In Fig. 3a ist eine weitere Ausführungsform des bidirektionalen Schalters 40 dargestellt, der in einer Alternative anstatt der in Fig. 2 dargestellten Ausführungsform innerhalb der Anordnung 18 Verwendung findet. Der bidirektionale Schalter 40 umfasst ebenfalls den ersten Pfad 46 sowie den zweiten Pfad 48, die zueinander parallel geschalten sind. Sowohl der erste Pfad 46 als auch der zweite Pfad 48 weist jeweils einen Halbleiterschalter 62 auf, der in Reihe zu einer Diode 64 geschaltet ist. Die beiden Halbleiterschalter 62 sind baugleich und jeweils ein IGBT, wobei der Emitter jedes der Halbleiterschalter 62 jedes Pfads 46,48 mit der Anode der jeweiligen Diode 64 elektrisch kontaktiert ist. Die Halbleiterschalter 62 und deren jeweils zugeordnete Diode 64 sind zueinander antiparallel geschaltet, sodass die Kathode der Diode 64 des ersten Pfads 46 auf dem gleichen elektrischen Potential wie der Kollektor des Halbleiterschalters 62 des zweiten Pfads 48 ist. Dieses Potential würde dem elektrischen Potential der Anode der dritten Diode 54 entsprechen. In einer weiteren Ausgestaltung, die jedoch nicht zwingend erforderlich ist, sind die Emitter der beiden Halbleiterschalter 62 mittels einer elektrischen Verbindung 66 miteinander kurzgeschlossen.

In Fig. 3b ist eine weitere Ausgestaltung des bidirektionalen Schalters 40 dargestellt, der mittels zweier in Reihe geschalteter, normal sperrender MOSFETs 68 realisiert ist. Die beiden Quellen der beiden MOSFETs 68 sind elektrisch kurzgeschlossen und deren jeweilige Inversdiode 70 folglich anderen Anodenseite miteinander elektrisch kontaktiert.

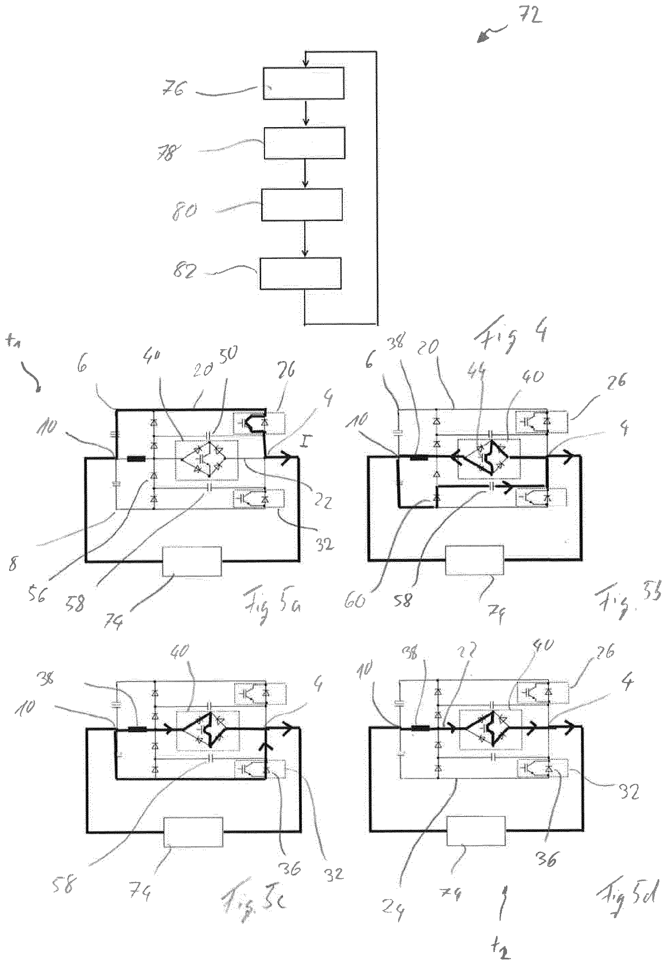

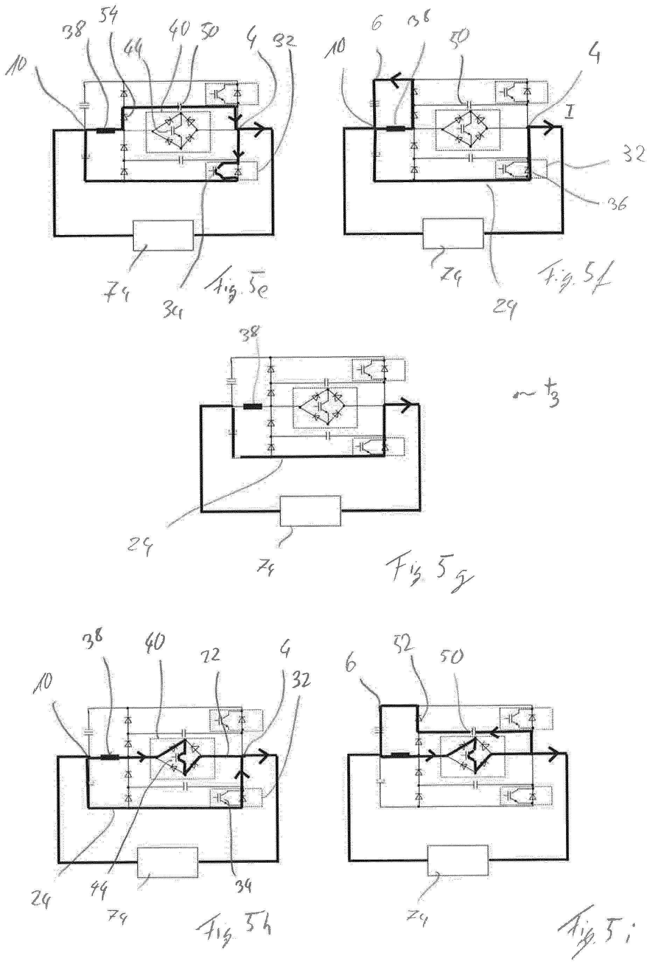

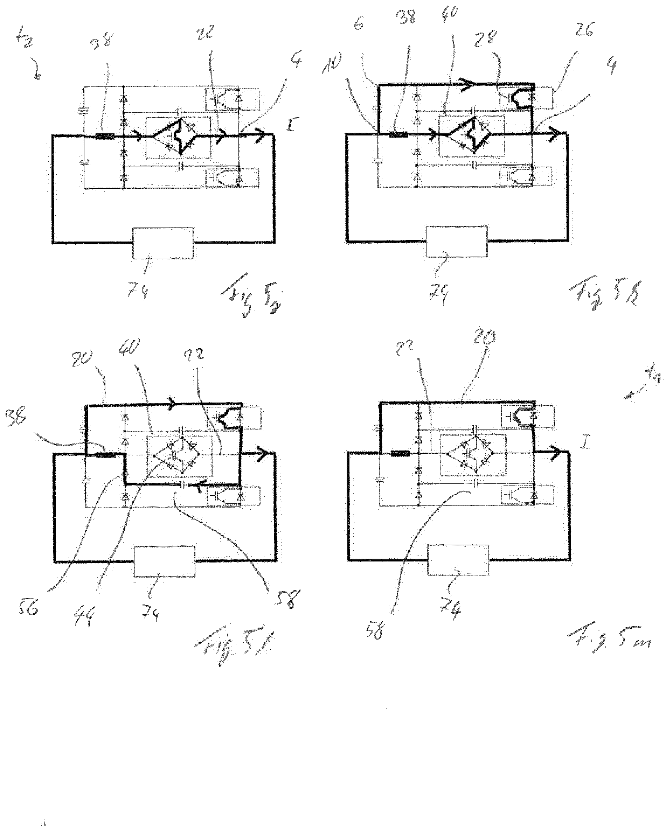

In Fig. 4 ist ein Verfahren 72 zum Betrieb des Umrichters 2 dargestellt, wobei in den Fig. 5a bis 5m ein Stromverlauf durch den Umrichter 2 gezeigt ist, sofern dieser lediglich eine einzige Anordnung 18 aufweist, also der Umrichter 2 einphasig aufgebaut ist. Eine Last 74 ist elektrisch mit dem Umrichter 2 kontaktiert und wird mittels einer eine Schaltfrequenz aufweisenden Wechselspannung beaufschlagt, wobei der resultierende Wechselstroms I aufgrund der vergleichsweise hohe Induktivität der Last 74 eine vielfach größere Frequenz aufweist. Die Last 74 ist einerseits mit dem Ausgang 4 und andererseits mit dem Mittelabgriff 10, also Masse 12, elektrisch kontaktiert. Auf diese Weise ist ein elektrischer Stromkreis realisiert. Bei dem in Fig. 5a gezeigten Zustand ist das erste Schaltelement 26 für eine erste Zeitspanne t1 aktiviert, also der Halbleiterschalter 28 des ersten Schaltelements 26 derart angesteuert, dass dieser elektrisch leitend ist. Sowohl der bidirektionale Schalter 40, als auch der Halbleiterschalter 34 des zweiten Schaltelements 32 sind elektrisch nicht leitend. Der erste Kondensator 50 ist nicht geladen, wohingegen der zweite Kondensator 58 elektrisch aufgeladen ist. Die mit dem Ausgang 4 elektrisch kontaktierte Elektrode des zweiten Kondensators 58 befindet sich auf dem elektrischen Potential des positiven Pols 6, wohingegen die verbleibende Elektrode sich auf dem elektrischen Potential des negativen Pols 8 befindet. Aufgrund der vierten Diode 56 ist eine Teilentladung des zweiten Kondensators 58 ausgeschlossen.

In einem ersten Arbeitsschritt 76 wird von dem oberen Zweig 20 auf den mittleren Zweig 22 kommutiert. Hierfür wird, wie in Fig. 5b dargestellt, das erste Schaltelement 26 derart angesteuert, dass der Halbleiterschalter 28 des ersten Schaltelements 26 keinen elektrischen Strom führt. Mit anderen Worten ist ein Stromfluss von dem positiven Pol 6 zu dem Ausgang 4 durch das erste Schaltelement 26 nicht möglich. Ebenfalls wird der bidirektionale Schalter 40 in einen elektrisch leitenden Zustand gebracht. Hierfür wird der Halbleiterschalter 44 in einen elektrisch leitenden Zustand versetzt. Aufgrund des schlagartigen Ausschaltens des ersten Schaltelements 26 erfolgt eine Entladung des zweiten Kondensators 58, so dass ein Spannungsabfall zwischen dem Ausgang 4 und dem positiven Pol 6 zeitverzögert erfolgt. Infolgedessen treten vergleichsweise geringe elektrische Verluste beim Ausschalten des ersten Schaltelements 26 auf.

Ferner ist ein Stromanstieg zwischen dem Mittelabgriff 43 und dem Ausgang 4 aufgrund der Induktivität 38 bei einem Stromfluss durch den bidirektionalen Schalter 40 zeitlich verlangsamt, so dass auch hier vergleichsweise geringe elektrische Verluste auftreten. Mittels der Induktivität 38 und des zweiten Kondensators 58 ist ein Schwingkreis gebildet, wobei aufgrund der zweiten Diode 60 eine Aufladung des zweiten Kondensators 58 auf umgekehrte Polarität unterbunden ist. Der aufgrund der Induktivität 38 aufrecht erhaltene Stromfluss wird nach Entladung des zweiten Kondensators 58 über die Freilaufdiode 36 des zweiten Schaltelements 32 abgebaut, wobei durch den bidirektionalen Schalter 40 lediglich ein Stromfluss von dem Mittelabgriff 10 zu dem Ausgang 4 besteht, wie in Fig. 5c dargestellt.

Nach der zweiten Phase der Kommutierung führt lediglich der mittlere Zweig 22 mit dem bidirektionalen Schalter 40 den elektrischen Strom, und durch die Induktivität 38 besteht ein im Wesentlichen konstanter elektrischer Stromfluss. Sowohl das erste Schaltelement 26 als auch das zweite Schaltelement 32 sind nach erfolgter Kommutierung auf den mittleren Zweig 22 gesperrt, wie in Fig. 5d dargestellt. Der vollständige elektrische Strom wird mittels des Halbleiterschalters 44 des bidirektionalen Schalters 40 sowie dessen Dioden getragen, was zu einer Erwärmung von diesen führt.

Im Wesentlichen unverzüglich nach Erreichen des in Fig. 5d dargestellten Zustandes, also nach Beendigung einer Stromführung mittels der Freilaufdiode 36 des zweiten Schaltelements wird ein zweiter Arbeitsschritt 78 ausgeführt. Mit anderen Worten besteht der in Fig. 5d gezeigte Zustand für eine zweite Zeitspanne t2, die jedoch im Wesentlichen gegen Null geht. Beim zweiten Arbeitsschritt 78 wird von dem mittleren Zweig 22 auf den unteren Zweig 24 kommutiert. Hierfür wird, wie in Fig. 5e dargestellt, der Halbleiterschalter 44 des bidirektionalen Schalters 40 erneut in einen elektrisch nicht leitenden Zustand versetzt, also der bidirektionale Schalter 40 gesperrt. Mit anderen Worten wird, sobald der elektrische Strom I lediglich mittels des mittleren Zweiges 22 geführt wird, also der vollständige elektrische Strom I mittels des Halbleiterschalters 44 des bidirektionalen Schalters 40 geführt wird, der bidirektionale Schalter 40 gesperrt, was eine weitere thermische Belastung verhindert. Ferner wird gleichzeitig der Halbleiterschalter 34 des zweiten Schaltelements 32 in einen elektrisch leitenden Zustand versetzt. Aufgrund der Induktivität 38 besteht ein Stromfluss fort, der eine Ladung des ersten Kondensators 50 bedingt. Eine Entladung aufgrund des auf diese Weise gebildeten Schwingkreises wird mittels der dritten Diode 54 verhindert.

Nach erfolgter Ladung des ersten Kondensators 50 wird der aufgrund der Induktivität 38 fortbestehende elektrische Stromfluss mittels der ersten und dritten Diode 52,54 über den positiven Pol 6 abgebaut. Infolgedessen ist ein elektrischer Stromfluss von dem Mittelabgriff 10 zum Ausgang 4 lediglich mittels des unteren Zweiges 24 durch die Freilaufdiode 36 des zweiten Schaltelements 32 ermöglicht. Dieser besteht auch nach dem Zusammenbruch des mittels der Induktivität 38 gebildeten Stromkreises fort, so dass nun die Kommutierung auf den unteren Zweig 24 erfolgt ist, wie in Fig. 5g dargestellt. Die Kommutierung auf den unteren Zweig 24 wird hierbei für eine dritte Zeitspanne beibehalten, wobei das Verhältnis von Zeitspanne t1 zu t3 aufgrund einer Leistungsanforderung der Last 74 sowie in Abhängigkeit der Schaltfrequenz des Umrichters 21, also des Kommutierens von dem oberen Zweig 20 auf den unteren Zweig 24, wobei der mittlere Zweig 22 lediglich zur Stromführung für die zweite Zeitspanne t2 verwendet wird.

In einem dritten Arbeitsschritt 80 wird nach Beendigung der dritten Zeitspanne t3 von dem unteren Zweig 24 auf den mittleren Zweig 22 kommutiert. Hierbei wird der Halbleiterschalter 24 des zweiten Schaltelements 32 in einen elektrisch nicht leitenden und der bidirektionale Schalter 40 in einen elektrisch leitenden Zustand versetzt. Der Halbleiterschalter 44 wird in einen elektrisch leitenden Zustand versetzt, sodass sich aufgrund der Induktivität ein zeitlich verlangsamter Stromanstieg durch den bidirektionalen Schalter 40 ergibt. Dieser bildet in einer zweiten Phase, wie in Fig. 5i gezeigt, mit dem ersten Kondensator 50 einen Schwingkreis, der zu einer Ladung des ersten Kondensators 50 führt, wobei eine Entladung mittels der ersten Diode 20 verhindert ist. Nach vollständiger Ladung des ersten Kondensators 50 führt lediglich der mittlere Zweig 22 den elektrischen Strom I, wie in Fig.5j gezeigt.

Dieser Zustand dauert erneut für die zweite Zeitspanne t2. Die zweite Zeitspanne t2 ist wiederum konstant und unabhängig von sowohl der ersten Zeitspanne t1 als auch der dritten Zeitspanne t3. Die zweite Zeitspanne t2 ist wiederum im Wesentlichen gleich null. Mit anderen Worten wird im Wesentlichen unverzüglich, nachdem sich der Stromfluss I lediglich mittels des mittleren Zweigs 22 ergibt, ein vierter Arbeitsschritt 82 ausgeführt, bei dem von dem mittleren Zweig 22 erneut auf den oberen Zweig 20 kommutiert wird. Hierbei wird zunächst der Halbleiterschalter 28 des ersten Schaltelements 26 in einen elektrisch leitenden Zustand versetzt, was einen Stromfluss von dem positiven Pol 6 zu dem Ausgang 4 ermöglicht. Aufgrund der Induktivität 38 besteht ein Stromfluss von dem Mittelabgriff 10 über den bidirektionalen Schalter 40 zu dem Ausgang 4 fort, sodass an dem ersten Schaltelement 28 zwar eine vergleichsweise hohe elektrische Spannung, jedoch beim Einschaltvorgang im Wesentlichen kein elektrischer Stromfluss vorliegt. Infolgedessen entstehen vergleichsweise geringe elektrische Verluste.

In einer zweiten Phase, wie in Fig. 5I gezeigt, wird der bidirektionale Schalter 40 in einen elektrisch nicht leitenden Zustand versetzt. Mit anderen Worten ist kein Stromfluss durch den bidirektionalen Schalter 40 möglich, unabhängig von der Stromrichtung. Hierfür ist der Halbleiterschalter 44 des bidirektionalen Schalters 40 in einen elektrisch nicht leitenden Zustand versetzt. Aufgrund der Induktivität 38 und des zweiten Kondensators 58 ist wiederum ein Schwingkreis gebildet, der zu einer Ladung des zweiten Kondensators 58 führt, der mittels der vierten Diode 56 an einer Entladung gehindert wird. Nach vollständiger Ladung des zweiten Kondensators 58 ist die Kommutierung auf den oberen Zweig abgeschlossen. Mit anderen Worten wird lediglich mittels des oberen Zweiges 20 der Wechselstrom I durch den Umrichter 2 geführt. Die Führung mittels des oberen Zweigs 20 dauert wiederum für die erste Zeitspanne t1 an, die mindestens das Zehnfache der zweiten Zeitspanne t2 beträgt, sofern die zweite Zeitspanne t2 nicht null ist. Die erste Zeitspanne t1 beträgt beispielsweise zwischen einer und fünf Mikrosekunden, wobei zweckmäßigerweise die dritte Zeitspanne t3 zwischen einer und fünf Mikrosekunden beträgt. Die zweite Zeitspanne t2 ist insbesondere kleiner als zehn Nanosekunden, fünf Nanosekunden, eine Nanosekunde, 0,1 Nanosekunden, 0,01 Nanosekunden. Nach Beendigung der ersten Zeitspanne t1 wird erneut der erste Arbeitsschritt 76 ausgeführt und auf dem mittleren Zweig 22 kommutiert.

Sofern eine Leistungsanforderung der Last 74 derart ist, dass eine Aufladung des ersten Kondensators 50 bzw. zweiten Kondensators 58 mittels der Induktivität 38 aufgrund der hierfür benötigten Zeit oder der Eigenfrequenz des auf diese Weise gebildeten Schwingkreises nicht möglich ist, also ein Kommutieren von dem oberen Zweig 20 auf den unteren Zweig 24 in einer kürzeren Zeitspanne erfolgen muss, wird bei dem Verfahren 72 der zweite Arbeitsschritt 78 und der vierte Arbeitsschritt 82 ausgelassen und im ersten Arbeitsschritt 76 direkt von dem oberen Zweig 20 auf den unteren Zweig 24 kommutiert, sowie in dem dritten Arbeitsschritt 80 von dem unteren Zweig 24 auf den oberen Zweig 20 elektrisch kommutiert. Hierbei verbleibt der bidirektionale Schalter 40 stets im elektrisch nicht leitenden Zustand, was zwar zu einer vergleichsweise großen Verlustleistung sowohl des ersten Schaltelements 26 als auch des zweiten Schaltelements 32 führt, jedoch den Umrichter 2 zu weiteren Leistungsabgaben ertüchtigt.

Mittels des Verfahrens 72 ist folglich ein Betrieb der in Fig. 2 gezeigten Anordnung 18 mit dem Brückengleichrichter 42 im 3-Level Betrieb ermöglicht, wobei der erste und zweite Kondensator 50, 58 und/oder die erste, zweite, dritte und vierte Diode 52, 60, 54, 56 beispielsweise nicht vorhanden sind. Sofern dieses Verfahren 72 nicht verwendet würde, würde eine direkte Kommutierung von dem oberen Zweig 20 auf den mittleren Zweig 22 nämlich nicht möglich sein. In diesem Fall wäre nämlich der Halbleiterschalter 28 des ersten Schaltelements 26 zunächst elektrisch leitend. Vor einem Öffnen des Halbleiterschalters 28 des ersten Schaltelements 26 ist es nicht möglich, den Halbleiterschalter 44 des bidirektionalen Schalters 40 in einen elektrisch leitenden Zustand zu versetzten, da dies zu einem Kurzschluss führen würde, nämlich zwischen dem positiven Pol 6 und Masse M. Folglich darf der Halbleiterschalter 44 des bidirektionalen Schalters 40 erst eine Zeitspanne, also eine Totzeit oder Verriegelungszeit, nach dem Öffnen des Halbleiterschalters 28 des ersten Schaltelements 26 geschlossen werden. Aufgrund der Induktivität der Last 74 besteht während der Totzeit jedoch der elektrische Strom fort. Dieser fließt folglich über die Freilaufdiode 36 des zweiten Schaltelements 32, so dass an dem Ausgang 4 aufgrund der Kommutierung die vollständige zwischen dem positiven Pol 6 und dem negativen Pol 8 herrschende elektrische Spannung abfällt. Mit anderen Worten wird zunächst auf den unteren Zweig 24 kommutiert. Bei einem anschließenden Schließen des Halbleiterschalters 44 des bidirektionalen Schalters 40 ist das elektrische Potential, auf dem der Ausgang 4 ist, Masse M, so dass wiederum eine elektrische Spannung abfällt. Zusammenfassend ist einerseits eine direkte Kommutierung von dem oberen Zweig 20 auf den mittleren Zweig 22 nicht möglich. Andererseits fällt am Ausgang bei der Kommutierung von dem oberen Zweig 20 auf den mittleren Zweig 22 sowohl die zwischen dem oberen Pol 6 und dem unteren Pol 8 als auch die zwischen dem unteren Pol 8 und dem Mittelabgriff 10 herrschende elektrisch Spannung zeitlich aufeinanderfolgend an, was die elektrischen Verluste sowie die Belastung erhöht.

Die Erfindung ist nicht auf die vorstehend beschriebenen Ausführungsbeispiele beschränkt. Vielmehr wird der Gegenstand der Erfindung durch die Patentansprüche definiert.

### Bezugszeichenliste

- 2: Umrichter
- 4: Ausgang
- 6: positive Pol
- 8: negative Pol
- 10: Mittelabgriff
- 12: Erde
- 14: erster Zwischenkreiskondensator
- 16: zweiter Zwischenkreiskondensator
- 18: Anordnung
- 20: oberer Zweig
- 22: mittlerer Zweig
- 24: unterer Zweig
- 26: erstes Schaltelement
- 28: Halbleiterschalter
- 30: Freilaufdiode
- 32: zweites Schaltelement
- 34: Halbleiterschalter
- 36: Freilaufdiode
- 38: Induktivität
- 40: bidirektionaler Schalter
- 42: Brückengleichrichter
- 44: Halbleiterschalter
- 46: erster Pfad
- 48: zweiter Pfad
- 50: erster Kondensator
- 52: erste Diode
- 54: dritte Diode
- 56: vierte Diode
- 58: zweiter Kondensator
- 60: zweite Diode
- 62: Halbleiterschalter
- 64: Diode
- 66: Verbindung
- 68: MOSFET
- 70: Inversdiode
- 72: Verfahren
- 74: Last
- 76: erster Arbeitsschritt
- 78: zweiter Arbeitsschritt
- 80: dritter Arbeitsschritt
- 82: vierter Arbeitsschritt

- I: Wechselstrom
- t1: erste Zeitspanne
- t2: zweite Zeitspanne
- t3: dritte Zeitspanne

## Patentansprüche

1. Umrichter (2), der einen Ausgang (4) und einen positiven Pol (6) als auch einen negativen Pol (8) sowie einen Mittelabgriff (10) aufweist, wobei
- der positive Pol (6) mittels eines ein erstes Schaltelement (26) aufweisenden oberen Zweigs (20) mit dem Ausgang (4)
- und der negative Pol (8) mittels eines ein zweites Schaltelement (32) aufweisenden unteren Zweigs (24) mit dem Ausgang (4)
- und der Mittelabgriff (10) mittels eines einen bidirektionalen Schalter (40) aufweisenden mittleren Zweigs (22) mit dem Ausgang (4) elektrisch kontaktiert ist, **dadurch gekennzeichnet, dass** eine Ansteuerung der Schaltelemente (26, 32, 40) dazu ausgebildet ist, ein Verfahren auszuführen, bei dem
- von dem oberen Zweig (20) auf den mittleren Zweig (22), und
- von dem mittleren Zweig (22) auf den unteren Zweig (24) elektrisch kommutiert wird, und bei dem
- die Zeitspanne (t2) der Stromführung mittels des mittleren Zweigs (22) konstant und die Zeitspanne (t1, t3) der Stromführung mittels des unteren und/oder oberen Zweigs (20, 24) anhand einer Leistungsanforderung gewählt wird.

2. Umrichter (2) nach Anspruch 1,
**dadurch gekennzeichnet,**
- **dass** das erste Schaltelement (26) mittels eines in Reihe zu einer ersten Diode (52) geschalteten ersten Kondensators (50) überbrückt ist, wobei der bidirektionale Schalter (40) mittels des in Reihe zu einer dritten Diode (54) geschalteten ersten Kondensators (50) überbrückt ist,
- **dass** das zweite Schaltelement (32) mittels eines in Reihe zu einer zweiten Diode (60) geschalteten zweiten Kondensators (58) überbrückt ist, wobei der bidirektionale Schalter (40) mittels des in Reihe zu einer vierten Diode (56) geschalteten zweiten Kondensators (58) überbrückt ist, und
- **dass** der Mittelabgriff (10) insbesondere mittels einer Induktivität (38) mit dem bidirektionalen Schalter (40) elektrisch kontaktiert ist.

3. Umrichter (2) nach Anspruch 1 oder 2,
**dadurch gekennzeichnet,**
**dass** das erste Schaltelement (26) und das zweite Schaltelement (32) jeweils einen Halbleiterschalter (28, 34) aufweist, insbesondere mit einer parallel geschalteten Freilaufdiode (30, 36).

4. Umrichter (2) nach einem der Ansprüche 1 bis 3,
**dadurch gekennzeichnet,**
**dass** der bidirektionale Schalter (40) zwei zueinander antiparallel und jeweils in Reihe mit einer Diode (64) geschaltete Halbleiterschalter (62) aufweist.

5. Umrichter (2) nach einem der Ansprüche 1 bis 4,
**dadurch gekennzeichnet,**
**dass** der bidirektionale Schalter (40) einen Brückengleichrichter (42) mit einem dazwischen geschalteten Halbleiterschalter (44) umfasst.

6. Umrichter (2) nach einem der Ansprüche 1 bis 5,
**dadurch gekennzeichnet,**
**dass** das erste Schaltelement (26) und das zweite Schaltelement (32) einen höheren Nominalstrom aufweisen als der bidirektionale Schalter (40).

7. Umrichter nach einem der Ansprüche 1 bis 6,
**dadurch gekennzeichnet,**
**dass** bei dem Verfahren (72) von dem unteren Zweig (24) auf den mittleren Zweig (22), und von dem mittleren Zweig (22) auf den oberen Zweig (20) elektrisch kommutiert wird.

8. Umrichter nach einem der Ansprüche 1 bis 7,
**dadurch gekennzeichnet,**
**dass** bei dem Verfahren (72) die Zeitspanne (t2) der Stromführung mittels des mittleren Zweigs (22) kleiner als die Zeitspanne (t1, t3) der Stromführung mittels des unteren und/oder oberen Zweigs (20, 24) gewählt wird.

## Claims

1. Converter (2), which has an output (4) and a positive pole (6) and also a negative pole (8) as well as a centre tap (10), wherein
- the positive pole (6) is electrically contact-connected to the output (4) by means of an upper branch (20) having a first switching element (26)
- and the negative pole (8) is electrically contact-connected to the output (4) by means of a lower branch (24) having a second switching element (32)
- and the centre tap (10) is electrically contact-connected to the output (4) by means of a central branch (22) having a bidirectional switch (40),
**characterized in that** an actuation system of the switching elements (26, 32, 40) is designed to execute a method in which
- electrical commutation is carried out from the upper branch (20) to the central branch (22), and
- electrical commutation is carried out from the central branch (22) to the lower branch (24), and in which
- the time period (t2) of the current conduction by means of the central branch (22) is selected to be constant and the time period (t1, t3) of the current conduction by means of the lower and/or upper branch (20, 24) is selected based on a power demand.

2. Converter (2) according to Claim 1, **characterized in that**
- the first switching element (26) is bypassed by means of a first capacitor (50) connected in series with a first diode (52), wherein the bidirectional switch (40) is bypassed by means of the first capacitor (50) connected in series with a third diode (54),
- the second switching element (32) is bypassed by means of a second capacitor (58) connected in series with a second diode (60), wherein the bidirectional switch (40) is bypassed by means of the second capacitor (58) connected in series with a fourth diode (56), and
- the centre tap (10) is electrically contact-connected to the bidirectional switch (40), in particular, by means of an inductance (38).

3. Converter (2) according to Claim 1 or 2, **characterized in that** the first switching element (26) and the second switching element (32) each have a semiconductor switch (28, 34), in particular having a parallel-connected freewheeling diode (30, 36).

4. Converter (2) according to one of Claims 1 to 3, **characterized in that** the bidirectional switch (40) has two semiconductor switches (62) connected in antiparallel with one another and each connected in series with a diode (64).

5. Converter (2) according to one of Claims 1 to 4, **characterized in that** the bidirectional switch (40) comprises a bridge rectifier (42) having a semiconductor switch (44) connected in between.

6. Converter (2) according to one of Claims 1 to 5, **characterized in that** the first switching element (26) and the second switching element (32) have a higher nominal current than the bidirectional switch (40).

7. Converter according to one of Claims 1 to 6, **characterized in that**, in the method (72), electrical commutation is carried out from the lower branch (24) to the central branch (22) and from the central branch (22) to the upper branch (20).

8. Converter according to one of Claims 1 to 7, **characterized in that**, in the method (72), the time period (t2) of the current conduction by means of the central branch (22) is selected to be shorter than the time period (t1, t3) of the current conduction by means of the lower and/or upper branch (20, 24).

## Revendications

1. Convertisseur statique (2), lequel possède une sortie (4) et un pôle positif (6) et aussi un pôle négatif (8) ainsi qu'une prise médiane (10),
- le pôle positif (6) étant mis en contact électrique avec la sortie (4) au moyen d'une branche supérieure (20) qui possède un premier élément de commutation (26),
- et le pôle négatif (8) avec la sortie (4) au moyen d'une branche inférieure (24) qui possède un deuxième élément de commutation (32),
- et la prise médiane (10) avec la sortie (4) au moyen d'une branche médiane (22) qui possède un commutateur bidirectionnel (40),
**caractérisé en ce qu'**une excitation des éléments de commutation (26, 32, 40) est configurée pour mettre en oeuvre un procédé avec lequel
- une commutation électrique est effectuée de la branche supérieure (20) à la branche médiane (22) et
- de la branche médiane (22) à la branche inférieure (24), et avec lequel
- l'intervalle de temps (t2) de passage de courant au moyen de la branche médiane (22) est choisi constant et l'intervalle de temps (t1, t3) de passage de courant au moyen de la branche inférieure et/ou supérieure (20, 24) au moyen d'une demande de puissance.

2. Convertisseur statique (2) selon la revendication 1, **caractérisé en ce**
- **que** le premier élément de commutation (26) est court-circuité au moyen d'un premier condensateur (50) branché en série avec une première diode (52), le commutateur bidirectionnel (40) étant court-circuité au moyen du premier condensateur (50) branché en série avec une troisième diode (54),
- **que** le deuxième élément de commutation (32) est court-circuité au moyen d'un deuxième condensateur (58) branché en série avec une deuxième diode (60), le commutateur bidirectionnel (40) étant court-circuité au moyen du deuxième condensateur (58) branché en série avec une quatrième diode (56),
et
- **que** la prise médiane (10) est mise en contact électrique avec le commutateur bidirectionnel (40), notamment au moyen d'une inductance (38).

3. Convertisseur statique (2) selon la revendication 1 ou 2, **caractérisé en ce que** le premier élément de commutation (26) et le deuxième élément de commutation (32) possèdent respectivement un commutateur à semiconducteur (28, 34), notamment avec une diode de roue libre (30, 36) branchée en parallèle.

4. Convertisseur statique (2) selon l'une des revendications 1 à 3, **caractérisé en ce que** le commutateur bidirectionnel (40) possède deux commutateurs à semiconducteur (28, 34) montés en tête-bêche et respectivement branchés en série avec une diode (64).

5. Convertisseur statique (2) selon l'une des revendications 1 à 4, **caractérisé en ce que** le commutateur bidirectionnel (40) comporte un redresseur en pont (42) avec un commutateur à semiconducteur (44) branché entre ceux-ci.

6. Convertisseur statique (2) selon l'une des revendications 1 à 5, **caractérisé en ce que** le premier élément de commutation (26) et le deuxième élément de commutation (32) possèdent un courant nominal supérieur à celui du commutateur bidirectionnel (40).

7. Convertisseur statique (2) selon l'une des revendications 1 à 6, **caractérisé en ce que** lors du procédé (72), une commutation électrique est effectuée de la branche inférieure (24) à la branche médiane (22), et de la branche médiane (22) à la branche supérieure (20).

8. Convertisseur statique (2) selon l'une des revendications 1 à 7, **caractérisé en ce que** lors du procédé (72), l'intervalle de temps (t2) de passage du courant au moyen de la branche médiane (22) est choisi inférieur à l'intervalle de temps (t1, t3) de passage de courant au moyen de la branche inférieure et/ou supérieure (20, 24).
